(19) Europäisches Patentamt
European Patent Office
Office européen des brevets

(11) **EP 4 718 695 A1**

(12) **EUROPEAN PATENT APPLICATION**

(43) Date of publication:
01.04.2026 Bulletin 2026/14

(21) Application number: 25201899.9

(22) Date of filing: 12.09.2025

(51) International Patent Classification (IPC):
*H02M 1/00* (2006.01)   *H02M 3/07* (2006.01)
*H02M 3/158* (2006.01)   *H02M 7/483* (2007.01)

(52) Cooperative Patent Classification (CPC):
**H02M 1/0095; H02M 3/07; H02M 3/072;
H02M 3/158;** H02M 7/4833

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **26.09.2024 US 202418897519**

(71) Applicant: **Avago Technologies International
Sales
Pte. Limited
Singapore 768923 (SG)**

(72) Inventors:
• **Rutherford, Mark David
Wellington, CO 80549 (US)**
• **Baker, Michael O.
Fort Collins, CO 80528 (US)**
• **Kirchoefer, John Robert
Fort Collins, CO 80526 (US)**
• **McNitt, John
Fort Collins, CO 80528 (US)**

(74) Representative: **Grünecker Patent- und
Rechtsanwälte
PartG mbB
Leopoldstraße 4
80802 München (DE)**

(54) **FLYING CAPACITOR VOLTAGE BALANCING TECHNIQUES FOR A MULTI-LEVEL BUCK CONVERTER**

(57)    An apparatus including a buck circuitry and logic circuitry. The buck circuitry charges a flying capacitor with a voltage in response to a device state being in a charging state and discharges the voltage from the flying capacitor in response to the device state being in a discharging state. The logic circuitry causes the buck circuitry to transition the device state in response to detecting voltage balance during a reference time period and causes the buck circuitry to repeat the device state occurring at the reference time period in response to detecting voltage imbalance during the reference time period.

**FIG. 1**

EP 4 718 695 A1

**Description**

**BACKGROUND**

Electronic devices from different manufacturers can receive a transfer of power. In some instances, operational voltage regulation in these electronic devices can have a multitude of options based on application requirements.

**BRIEF DESCRIPTION OF DRAWINGS**

The accompanying drawings, which are incorporated in and form a part of this specification, illustrate examples of the disclosure and, together with the description, explain principles of the examples.

FIG. 1 illustrates a functional block diagram of a device, in accordance with one or more embodiments of the disclosure.

FIG. 2 illustrates an exemplary switching regulator, in accordance with one or more embodiments of the disclosure.

FIG. 3 illustrates a simplified multi-level buck operation, in accordance with one or more embodiments of the disclosure.

FIG. 4 illustrates an exemplary output voltage loop, input voltage loop and input current loop, in accordance with one or more embodiments of the disclosure.

FIG. 5 illustrates exemplary PWM generators, in accordance with one or more embodiments of the disclosure.

FIG. 6 illustrates exemplary timing diagrams, in accordance with one or more embodiments of the disclosure.

FIG. 7 illustrates an exemplary flying voltage balancing operation, in accordance with one or more embodiments of the disclosure.

FIG. 8A illustrates an exemplary flying voltage discharge imbalance, in accordance with one or more embodiments of the disclosure.

FIG. 8B illustrates an exemplary flying voltage discharge imbalance correction operation, in accordance with one or more embodiments of the disclosure.

FIG. 9A illustrates an exemplary flying voltage charging imbalance, in accordance with one or more embodiments of the disclosure.

FIG. 9B illustrates an exemplary flying voltage charge imbalance correction operation, in accordance with one or more embodiments of the disclosure.

In the drawings, like reference symbols and numerals indicate the same or similar components. Like elements in the various figures are denoted by like reference symbols and numerals for consistency. Unless otherwise indicated, like elements and method steps are referred to with like reference numerals.

**DETAILED DESCRIPTION OF THE INVENTION**

The following describes technical solutions in this specification with reference to the accompanying drawings. Exemplary embodiments are described in detail with reference to the accompanying drawings.
The terminology used herein is for describing various examples only, and is not to be used to limit the disclosure. Unless otherwise defined, all terms, including technical and scientific terms, used herein have the same meaning as commonly understood by one of ordinary skill in the art to which this disclosure pertains and after an understanding of the disclosure of this application.
Terms, such as those defined in commonly used dictionaries, are to be interpreted as having a meaning that is consistent with their meaning in the context of the relevant art and the disclosure of this application. Although the present technology has been described by referring to certain examples, workers skilled in the art will recognize that changes may be made in form and detail without departing from the scope of the discussion.

Many electronic devices capable of receiving power can require extra circuitry to perform additional functions associated with the primary function of outputting power. In some electronic devices, switching regulators maintaining a constant switching frequency under light load conditions can lead to inefficiencies due to switching losses, which become more significant relative to the power being delivered to a load. According, there is a need in the art for an improved electronic device.

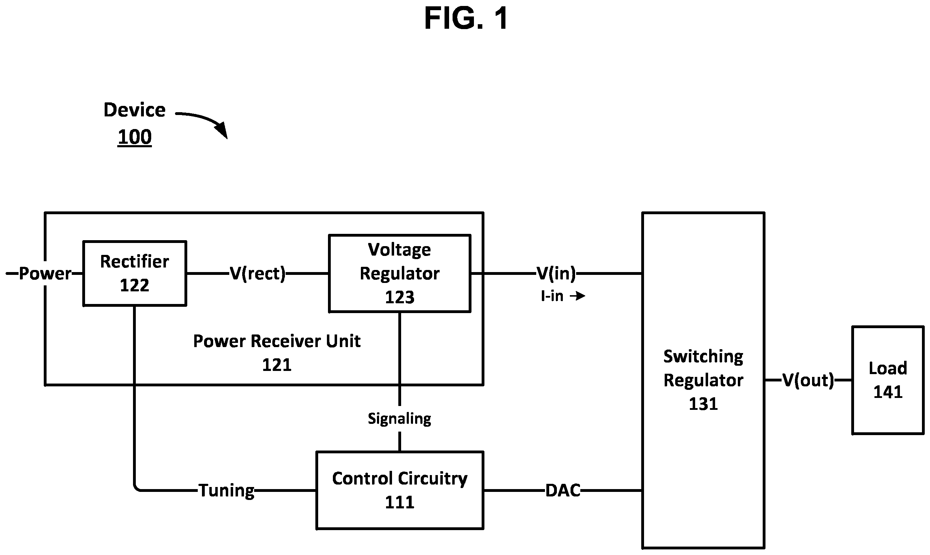

Referring to FIG. 1, a functional block diagram of device 100 according to exemplary embodiments is shown. Device 100 may include control circuitry 111, power receiver unit 121, switching regulator 131 and load 141. Load 141 is any device or component that may consume or store electrical power. Those skilled in the art will appreciate there may be additional components in device 100. In some examples, an integrated circuit chip may include power receiver unit 121. Another integrated circuit chip may include switching regulator 131.

Device 100 may be configured as any type of electrically-powered device that has computing capability. For example, device 100 may be configured as a mobile communication device including, but not limited to, a mobile phone, a smart phone, cell phone, or tablet. Device 100 may be configured as a wearable device, a smartwatch, a fitness tracker or a personal digital assistant (PDA). In some examples, device 100 may be found in apparatuses such as autonomous vehicles, robots and drones. In other examples, device 100 may be configured as a media device (e.g., media playing and/or recording device). Device 100 may include a portable music player, an audio device such as an audio recorder, an audio converter, an audio player, or a speaker (e.g., a Bluetooth-enabled speaker). In other instances, device 100 may include a video device such as a video display, a video recorder, a camera, or other video device. In another example, device 100 may be configured as, a driver assistance module in a vehicle, an emergency transponder, a pager, a satellite television receiver, a stereo receiver, a computer system, music player, laptop or tablet computer, home appliance, or virtually any other device. Device 100 may be configured as a computer (e.g., a laptop computer). In other examples, device 100 may be configured as a computing and/or entertainment device for a vehicle. Device 100 may be any portable electronic device that can be carried by or worn on a person.

Control circuitry 111 is electronic hardware implemented as any suitable processing circuitry. The processing circuitry may include, but not limited to at least one of a microcontroller, a microprocessor, a single processor, and a multiprocessor. Control circuitry 111 may include at least one of an embedded controller (EC), a central processing unit (CPU), an accelerated processing unit (APU), an application specific integrated circuit (ASIC), field programmable gate arrays (FPGA), logic circuitry, a state machine, programmable processor, or the like. Control circuitry 111 may be implemented as electronic hardware that may include digital circuits, analog circuits or a combination of both digital and analog circuits. Analog circuits may include analog components that are suitable to process analog gate signals. Digital circuits may include switches and gates that are suitable to process digital gate signals.

FIG. 1 illustrates an example power receiver unit 121 in which aspects of the present disclosure may be implemented. Components of power receiver unit 121 may include rectifier 122 and voltage regulator 123. Those skilled in the art will appreciate there may be additional components in power receiver unit 121.

In the example of FIG. 1, power may flow, wirelessly or by wire, into rectifier 122. Rectifier 122 is circuitry that may rectify the power into a rectified voltage V(rect). The power may be in the form of AC (alternating current) power and/or DC (direct current) power. Rectified voltage V(rect) is a DC voltage. In some instances, control circuitry 111 may send a tuning instruction along wiring to rectifier 122. The tuning instruction may command tuning, by rectifier 122, to the center frequency of the power. Rectifier 122 may be a voltage source. In response to producing rectified voltage V(rect), rectifier 122 may transform the power into rectified voltage V(rect).

Voltage regulator 123 is circuitry that may reduce or eliminate voltage fluctuations that may appear in rectified voltage V(rect). Voltage fluctuations are transients in the voltage level of a voltage. Transients may include voltage spikes, momentary increases and decreases of voltage, voltage ripple and/or other sudden uncontrolled transitions that may occur in the voltage. Control circuitry 111 may provide signaling that configures voltage regulator 123 to convert the rectified voltage V(rect) into an input voltage V(in). The input voltage V(in) is a DC voltage. An input current (I-in) may flow along with the input voltage V(in). In response to converting rectified voltage V(rect) into the input voltage V(in), voltage regulator 123 may maintain the input voltage V(in) at a constant voltage level despite any fluctuation in rectified voltage V(rect).

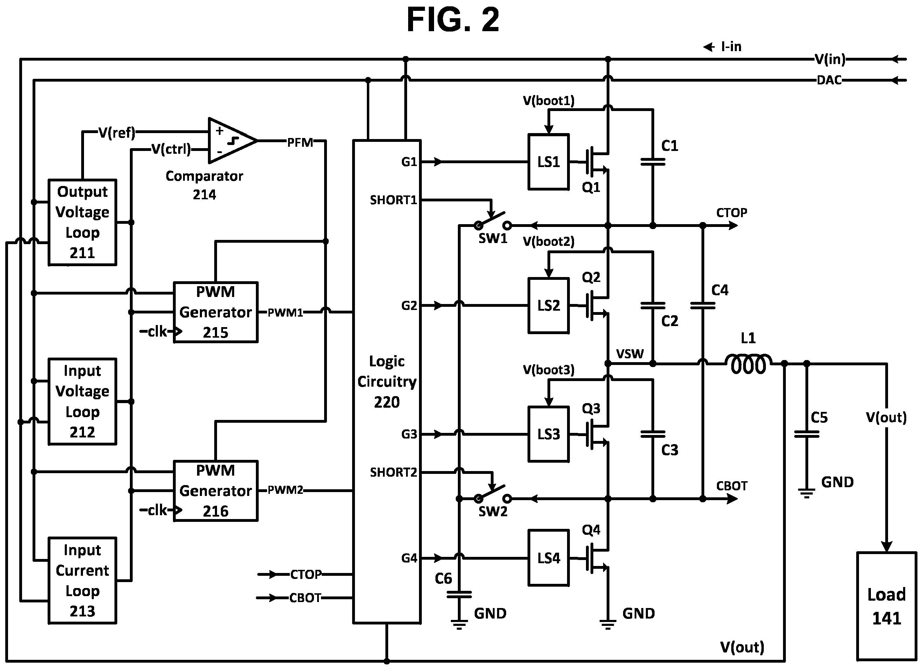

Referring to FIG. 2, an exemplary switching regulator 131 is illustrated. Switching regulator 131 may deliver multi-functional power regulation that can be pre-programmed depending on a functional application of switching regulator 131. For example, switching regulator 131 is circuitry that may condition the input voltage V(in). To condition the input voltage V(in), switching regulator 131 may operate as a multi-level buck controller, as will be explained in detail.

Switching regulator 131 is an apparatus. Included in switching regulator 131 are output voltage loop 211, input voltage loop 212, input current loop 213, comparator 214, PWM generators 215 and 216 and logic circuitry 220. Buck circuitry in switching regulator 131 may include switches SW1 and SW2, level shifters LS1-LS4, transistors Q1-Q4, capacitors C1-C6 and inductor L1. Buck circuitry, also known as a step-down converter, is circuitry that may reduce a higher-level input voltage V(in) to a lower-level the output voltage V(out) while concurrently increasing the current of the lower-level the output voltage V(out) to an amount greater than the input current (I-in) associated with the higher-level input voltage V(in). The topology of the buck circuitry may combine traits of two buck converter types. The two buck converter types may include a capacitive buck (charge pump) and an inductive buck. Those skilled in the art will appreciate there may be additional components in switching regulator 131.

Switches SW1 and SW2 may be implemented as N-type metal-oxide-semiconductor (NMOS) transistors. For example, switches SW1 and SW2 may each be an N-type laterally-diffused metal-oxide semiconductor (LDNMOS) transistor. Alternatively, any of the switches SW1 and SW2 may be implemented as a Field Effect Transistor (FET), a bipolar transistor, a P-type metal-oxide-semiconductor (PMOS) transistor, or any other switching device.

Transistors Q1-Q4 may be implemented as N-type metal-oxide-semiconductor (NMOS) transistors. For example, transistors Q1-Q4 may each be an N-type laterally-diffused metal-oxide semiconductor (LDNMOS) transistor. Alternatively, any of the transistors Q1-Q4 may be implemented as a Field Effect Transistor (FET), a bipolar transistor, a P-type metal-oxide-semiconductor (PMOS) transistor, or any other switching device.

Referring to capacitors C1-C3, boot capacitor C1 may store a voltage V(boot1), boot capacitor C2 may store a voltage V(boot2) and boot capacitor C3 may store a voltage V(boot3). Level shifter LS1 is connected in parallel with boot capacitor C1. Boot capacitor C1, level shifter LS1 and the drain of transistor Q2 are coupled to the source of transistor Q1. The gate of transistor Q1 is coupled to level shifter LS1. Level shifter LS2 is connected in parallel with boot capacitor C2. The source of transistor Q2 is coupled to boot capacitor C2, level shifter LS2 and the drain of transistor Q3. The gate of transistor Q2 is coupled to level shifter LS2. The gate of transistor Q3 is coupled to level shifter LS3. Boot capacitor C3 is coupled to level shifter LS3 and the source of transistor Q3. The drain of transistor Q4 is coupled to the source of transistor Q3. Level shifter LS4 is coupled to the gate of transistor Q4.

Via node CTOP, a terminal of flying capacitor C4 may be coupled to the source of transistor Q1 and the drain of transistor Q2. The drain of transistor Q1 may be coupled to the input voltage V(in). Via Node VSW, a terminal of inductor L1 may be coupled to the source of transistor Q2 and the drain of transistor Q3. Inductor L1 is an optional component that may be omitted in some instances. Via node CBOT, another terminal of flying capacitor C4 may be coupled to the source of transistor Q3 and the drain of transistor Q4. The source of transistor Q4 and a terminal of shunt capacitor C5 may be coupled to ground. Another terminal of inductor L1 may be coupled to another terminal of shunt capacitor C5, on which the output voltage V(out) may appear.

A terminal of balancing capacitor C6 may be coupled to a terminal of switch SW1 and to a terminal of switch SW2. Node CTOP may be coupled to another terminal of switch SW1. Node CBOT may be coupled to another terminal of switch SW2. Another terminal of balancing capacitor C6 may be coupled to ground.

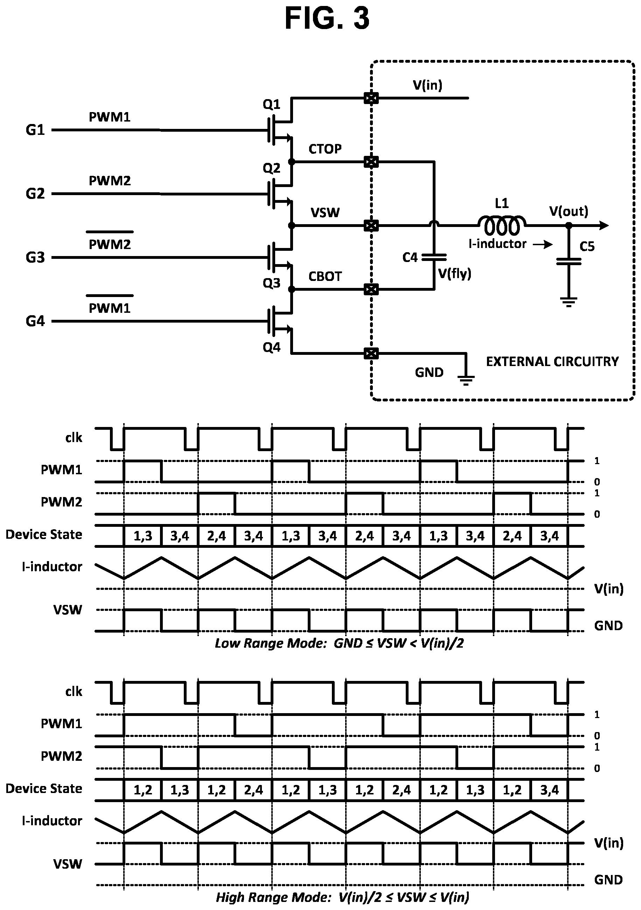

FIG. 3 illustrates a simplified multi-level buck operation for the buck circuitry. Omission of capacitors C1-C3 and C6, switches SW1 and SW2 and level shifters LS1-LS4 from the illustration of FIG. 3 is solely for simplicity and is not intended to suggest their absence from the example of FIG. 3.
Turning now to FIG. 3:

$$\text{output voltage V(out)} = (\text{input voltage V(in)}) \times (\text{duty cycle of signal PWM1 or PWM2})$$

Note that the duty cycle of signals PWM1 and PWM2 are identical in the example of FIG. 3.

Switching regulator 131 may charge flying capacitor C4 to a voltage level of input voltage V(in)/2 during the multi-level buck operation. Logic circuitry 220 may sample the output voltage V(out) on the falling edge of system clock (clk). During the multi-level buck operation, the multi-level buck operation may include a low range mode and a high range mode. In response to the output voltage V(out) being less than input voltage V(in)/2, logic circuitry 220 may place switching regulator 131 into the low range mode. While switching regulator 131 is in the low range mode, inductor current (I-inductor) may ramp up in response to signal PWM1 being logic 1 and also in response to signal PWM2 being logic 1. Alternatively, logic circuitry 220 may place switching regulator 131 into the high range mode in response to the output voltage V(out) being equal to or greater than input voltage V(in)/2. While switching regulator 131 is in the high range mode, inductor current (I-inductor) may ramp down in response to signal PWM1 being logic 0 and also in response to signal PWM2 being logic 0.

Signal PWM1 and signal PWM2 may be pulse width modulated signals. PWM generator 215 may generate signal PWM1. Signal PWM1 may drive transistor Q1 on gate line G1 and inverted signal PWM1 may drive transistor Q4 on gate line G4. As an output from PWM generator 216, signal PWM2 may drive transistor Q2 on gate line G2. Inverted signal PWM2 may drive transistor Q3 on gate line G3.

A full clock cycle is the duration of time between two consecutive rising edges of system clock (clk). In the example timing diagram of FIG. 3, signal PWM1 and signal PWM2 may transition on the rising edge of system clock (clk) and are interleaved 180° apart. Duty cycles for signals PWM1 and PWM2 may be proportional to control voltage V(ctrl) and inversely proportional to input voltage V(in). Gates of transistors Q1-Q4 may be driven in complementary pairs. For example, device states indicate which complementary pairs of the transistors Q1-Q4 are conductive, as shown in Table 1 below.

| TABLE 1 | | | | |
|---|---|---|---|---|
| Device State | Q1 | Q2 | Q3 | Q4 |
| 1, 3 | X | | X | |
| 3, 4 | | | X | X |
| 2, 4 | | X | | X |
| 3, 4 | | | X | X |
| | | | | |
| 1, 2 | X | X | | |
| 1, 3 | X | | X | |
| 1, 2 | X | X | | |
| 2, 4 | | X | | X |

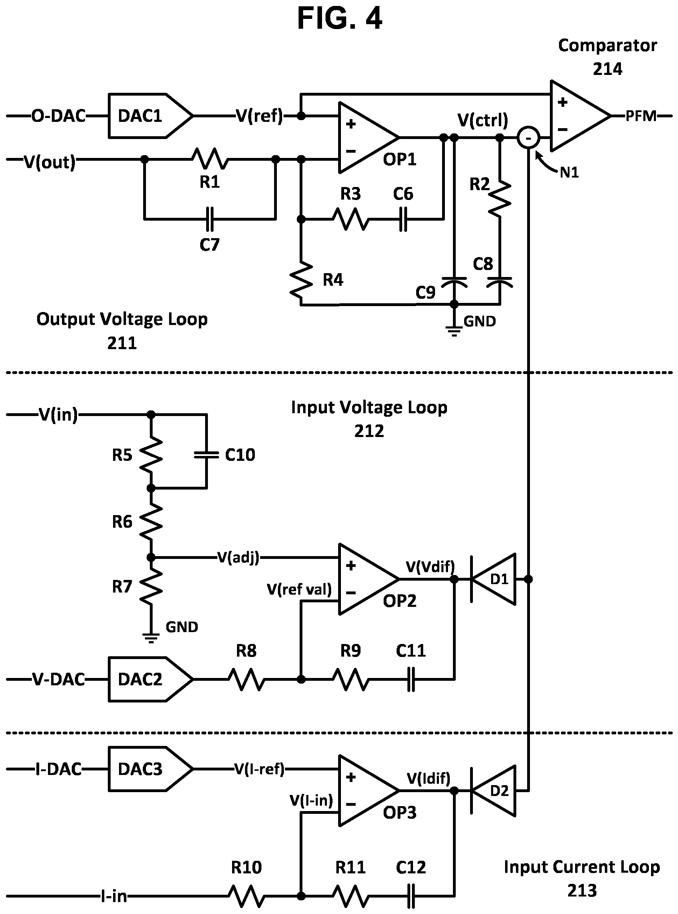

In some switching regulators, multiple control loops can attempt to maintain boundary conditions of input voltages, output voltages and currents. In many instances, however, contention between control loops in these switching regulators can be difficult stabilize in operation on a single control node. As a solution to contention between control loops in switching regulators, FIG. 4 illustrates an exemplary output voltage loop 211, an exemplary input voltage loop 212 and an exemplary input current loop 213.

Control circuitry 111 may provide predetermined user settings (DAC) to switching regulator 131. The predetermined user settings (DAC) may include O-DAC, V-DAC and I-DAC. Turning now to FIG. 4, output voltage loop 211 may include digital-to-analog converter DAC1 which receives, from control circuitry 111, O-DAC in the form of a digital word. O-DAC is a predetermined user setting that represents an output voltage setpoint for reference output voltage V(ref). DAC1 converts the output voltage setpoint from the digital word to a reference output voltage V(ref). Reference output voltage V(ref) is an analog voltage. The positive terminal of op amp OP1 may receive reference output voltage V(ref). Output voltage loop 211 may receive the output voltage V(out) from an output of the buck circuitry, as illustrated in the example of FIG. 2. The negative terminal of op amp OP1 may receive the output voltage V(out) through resistor-capacitor filter R1/C7. Current-limiting resistor R4 may provide a path from the negative terminal of op amp OP1 to ground. A negative feedback path from the output of op amp OP1 to the negative terminal of op amp OP1 may exist through resistor-capacitor filter R3/C6. A resistor-capacitor filter R2/C8 at the output of op amp OP1 may exist. Also at the output of op amp OP1, there may exist a capacitive filter C9 to ground. The positive terminal of comparator 214 may receive reference output voltage V(ref). The negative terminal of comparator 214 may receive control voltage V(ctrl) from the output of op amp OP1.

Control voltage V(ctrl) may be the voltage difference between reference output voltage V(ref) at the positive terminal of op amp OP1 and the output voltage V(out) at the negative terminal of op amp OP1. In cases where the reference output voltage V(ref) is equal to the output voltage V(out), control voltage V(ctrl) is a zero voltage level. Control voltage V(ctrl) is a positive voltage in cases where reference output voltage V(ref) is greater than the output voltage V(out). Output voltage loop 211 may pull up control voltage V(ctrl) in response to reference output voltage V(ref) being greater than the output voltage V(out). In cases where reference output voltage V(ref) is less than the output voltage V(out), control voltage V(ctrl) is a negative voltage. Output voltage loop 211 may pull down control voltage V(ctrl) in response to reference output voltage V(ref) being less than the output voltage V(out).

Input voltage loop 212 may include a resistor-capacitor filter R5/C10 and a voltage divider R6/R7. The positive terminal of op amp OP2 may receive adjusted input voltage V(adj) from the voltage divider R6/R7. Input voltage loop 212 may include digital-to-analog converter DAC2 which receives, from control circuitry 111, V-DAC in the form of a digital word. V-DAC is a predetermined user setting that represents an input voltage setpoint for adjusted input voltage V(adj). DAC2 converts the input voltage setpoint from the digital word to a reference input voltage. The reference input voltage is an analog voltage. Through current limiting resistor R8, the negative terminal of op amp OP2 may receive an analog reference value V(ref val) for adjusted input voltage V(adj). A negative feedback path from the output of op amp OP2 to the negative terminal of op amp OP2 may exist through resistor-capacitor filter R9/C11.

An input voltage loop differential voltage V(Vdif) may appear at the output terminal of op amp OP2. The input voltage loop differential voltage V(Vdif) is the voltage difference between the adjusted input voltage V(adj) at the positive terminal of op amp OP2 and the analog reference value V(ref val) for adjusted input voltage V(adj) at the negative terminal of op amp OP2. In response to adjusted input voltage V(adj) being equal to the reference input voltage, the input voltage loop differential voltage V(Vdif) is a zero voltage level. The input voltage loop differential voltage V(Vdif) is a positive voltage in response to adjusted input voltage V(adj) being greater than the reference input voltage. In response to adjusted input voltage V(adj) being less than the reference input voltage, the input voltage loop differential voltage V(Vdif) is a negative voltage.

A reverse-biased diode D1 may cause input voltage loop 212 to perform as a current sink in response to the input voltage loop differential voltage V(Vdif) being a negative value. While performing as a current sink, input voltage loop 212 may pull down control voltage V(ctrl) to reduce control voltage V(ctrl) by an amount proportional to the input voltage loop differential voltage V(Vdif). Those skilled in the art will appreciate there may be more than one input voltage loop 212 in switching regulator 131.

Input current loop 213 may include digital-to-analog converter DAC3. From control circuitry 111, digital-to-analog converter DAC3 may receive I-DAC in the form of a digital word. I-DAC is a predetermined user setting that represents an input current setpoint for the input current (I-in). DAC3 converts the input current setpoint from the digital word to an input current reference V(I-ref). The input current reference V(I-ref) is an analog voltage.

The positive terminal of op amp OP3 may receive the input current reference V(I-ref). The negative terminal of op amp OP3 may receive, through current limiting resistor R10, a voltage V(I-in) representing the input current (I-in). A negative feedback path from the output of op amp OP3 to the negative terminal of op amp OP3 may exist through resistor R11 and capacitor C12.

An input current loop differential voltage V(Idif) may appear at the output terminal of op amp OP3. The input current loop differential voltage V(Idif) is the voltage difference between input current reference V(I-ref) at the positive terminal of op amp OP3 and the voltage V(I-in) representing the input current (I-in) at the negative terminal of op amp OP3. In response to the input current reference being equal to the voltage V(I-in) representing the input current (I-in), the input current loop differential voltage V(Idif) is a zero voltage level. The input current loop differential voltage V(Idif) is a positive voltage in response to the input current reference being greater than the voltage V(I-in) representing the input current (I-in). In response to the input current reference being less than the voltage V(I-in) representing the input current (I-in), the input current loop differential voltage V(Idif) is a negative voltage.

A reverse-biased diode D2 may cause input current loop 213 to perform as a current sink in response to the input current loop differential voltage V(Idif) being a negative value. While performing as a current sink, input current loop 213 may pull down control voltage V(ctrl) to reduce control voltage V(ctrl) by an amount proportional to the input current loop differential voltage V(Idif). Those skilled in the art will appreciate there may be more than one input current loop 213 in switching regulator 131.

Input voltage loop 212 may perform as the current sink in cases where the amount of the input voltage loop differential voltage V(Vdif) is more negative than the amount of the input current loop differential voltage V(Idif). Alternatively, in cases where the amount of the input current loop differential voltage V(Idif) is more negative than the amount of the input voltage loop differential voltage V(Vdif), input current loop 213 may perform as the current sink. The current sinks of input voltage loop 212 and input current loop 213 combined with control voltage V(ctrl) results in a condition where control voltage V(ctrl), the input voltage loop differential voltage V(Vdif) or the input current loop differential voltage V(Idif) having the greatest variance from its respective setpoint value will have the largest influence on the value of signal PFM at the output of comparator 214.

In accordance with one or more embodiments of the disclosure, operational conflicts between output voltage loop 211, input voltage loop 212 and input current loop 213 of switching regulator 131 are eliminated by implementing a topology that includes output voltage loop 211, input voltage loop 212 and input current loop 213 configured to each regulate control voltage V(ctrl) at a single control node (N1).

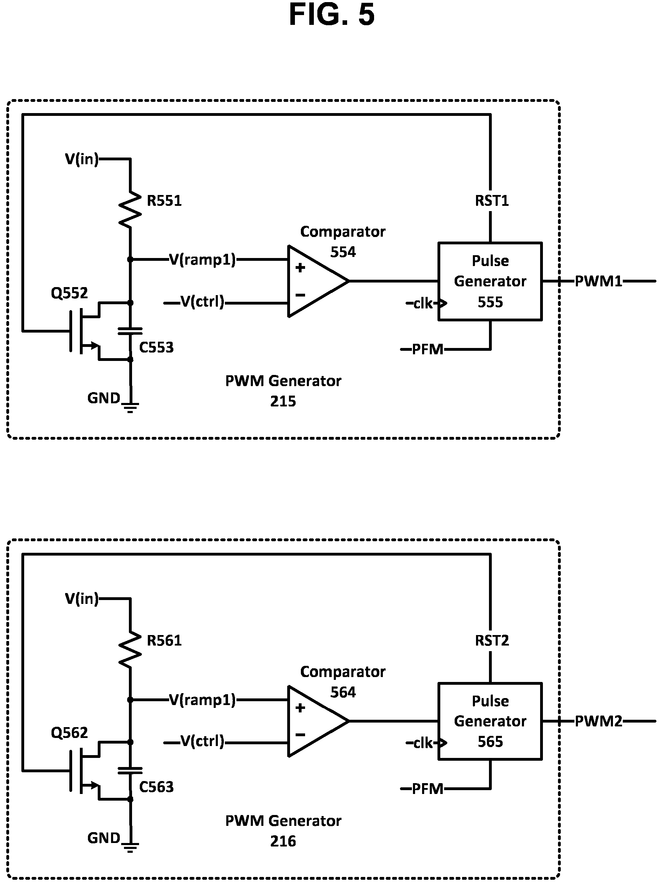

Referring to FIG. 5, exemplary PWM generators 215 and 216 are illustrated. Signal PWM1 and signal PWM2 may be pulse width modulated signals. PWM generator 215 may generate signal PWM1. PWM generator 216 may generate signal PWM2. In some configurations, PWM generator 215 may include resistor R551, transistor Q552, capacitor C553, comparator 554 and pulse generator 555. PWM generator 216 may include resistor R561, transistor Q562, capacitor C563, comparator 564 and pulse generator 565. Transistors Q552 and Q562 may be implemented as N-type metal-oxide-semiconductor (NMOS) transistors. For example, transistors Q552 and Q562 may each be an N-type laterally-diffused metal-oxide semiconductor (LDNMOS) transistor. Alternatively, any of the transistors Q552 and Q562 may be implemented as a Field Effect Transistor (FET), a bipolar transistor, a P-type metal-oxide-semiconductor (PMOS) transistor, or any other switching device. Those skilled in the art will appreciate there may be additional components in PWM generators 215 and 216.

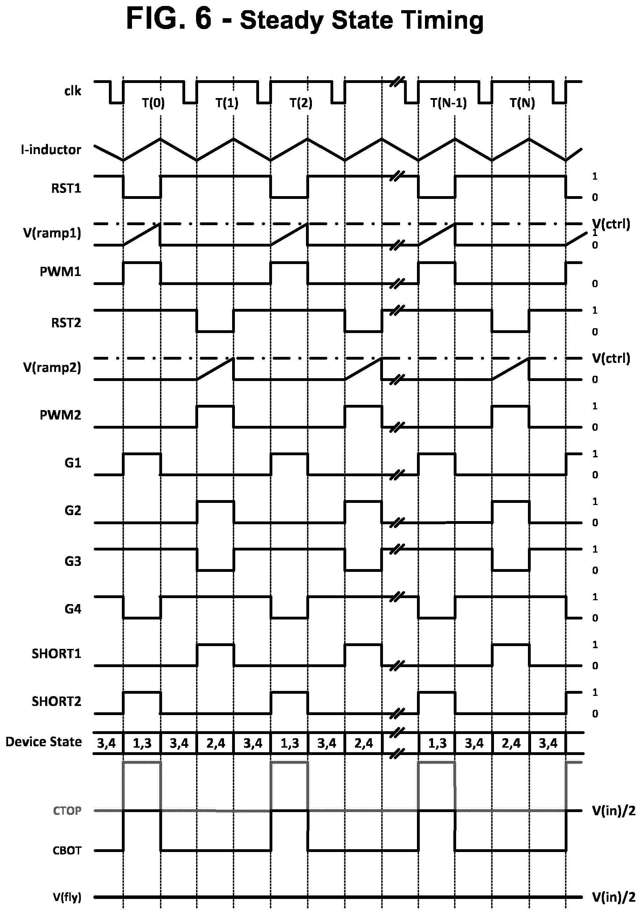

FIG. 6 illustrates a timing diagram while switching regulator 131 is in the low range mode. Those skilled in the art will appreciate that the examples presented in FIGS. 6, 7, 8A, 8B, 9A and 9B are equally applicable while switching regulator 131 is in the high range mode.

Voltage balance is a condition where an average value for flying voltage V(fly) is the input voltage V(in)/2. As requirement for optimum performance of multi-level buck operation to occur in switching regulator 131, flying voltage V(fly) is to remain in balance around a voltage level of the input voltage V(in)/2, as illustrated in FIG. 6. Flying voltage V(fly) is in balance in cases where an equivalence exists between the time period for the charging state and the time period for the discharging state. While in balance, an average value for flying voltage V(fly) is the input voltage V(in)/2.

Illustrated in FIG. 6 are time periods T(0) through T(N), "N" is an integer number greater than 2. The switching of signals PWM1 and PWM2 is typically recurring. Signals PWM1 and PWM2 transition from one logic level to another logic level on the rising edge of system clock (clk). Transitions of signals PWM1 and PWM2 are interleaved apart by a cycle of system clock (clk).

As will be explained in detail, pulse generators 555 and 565 in FIG. 5 may adjust duty cycles for signals PWM1 and PWM2 to regulate the output voltage V(out) according to the power demands of load 141. For example, duty cycles for signals PWM1 and PWM2 may be proportional to control voltage V(ctrl). As an illustration of this aspect, control voltage V(ctrl) may be the voltage difference between reference output voltage V(ref) at the positive terminal of op amp OP1 and the output voltage V(out) at the negative terminal of op amp OP1 as illustrated in FIG. 4. A resistor-capacitor filter R551/C553 at the positive input of comparator 554 may exist in PWM generator 215. Similarly, a resistor-capacitor filter R561/C563 at the positive input of comparator 564 may exist in PWM generator 216. The negative terminal of comparator 554 and the negative terminal of comparator 564 may receive control voltage V(ctrl).

In PWM generator 215, resistor R551 may receive the input voltage V(in). Pulse RST1 is a signal from pulse generator 555 that is fed back onto the gate of transistor Q552. In response to the rising edge of system clock (clk), pulse generator 555 may cause transistor Q552 to become non-conductive by transitioning pulse RST1. As a result of transistor Q552 being non-conductive, capacitor 553 may store the input voltage V(in) in capacitor 553 to generate ramp voltage V(ramp1) at the output of resistor-capacitor filter R551/C553. In response to ramp voltage V(ramp1) becoming equal to or greater than control voltage V(ctrl), pulse generator 555 may cause transistor Q552 to become conductive by transitioning pulse RST1. As a result of transistor Q552 being conductive, transistor Q552 may discharge ramp voltage V(ramp1) from capacitor 553 to ground. Pulse generator 555 may also transition signal PWM11 in response to ramp voltage V(ramp1) becoming equal to or greater than control voltage V(ctrl).

In PWM generator 216, resistor R561 may also receive the input voltage V(in). Pulse RST2 is a signal from pulse generator 565 that is fed back onto the gate of transistor Q562. In response to the rising edge of system clock (clk), pulse generator 565 may cause transistor Q562 to become non-conductive by transitioning pulse RST2. As a result of transistor Q562 being non-conductive, capacitor 563 may store the input voltage V(in) in capacitor 563 to generate ramp voltage V(ramp2) at the output of resistor-capacitor filter R561/C563. In response to ramp voltage V(ramp2) becoming equal to or greater than control voltage V(ctrl), pulse generator 565 may cause transistor Q562 to become conductive by transitioning pulse RST2. As a result of transistor Q562 being conductive, transistor Q562 may discharge ramp voltage V(ramp2) from capacitor 563 to ground. Pulse generator 565 may also transition signal PWM2 in response to ramp voltage V(ramp2) becoming equal to or greater than control voltage V(ctrl).

PWM generators 215 and 216 may receive signal PFM from the output terminal of comparator 214. Signal PFM may be the voltage difference between reference output voltage V(ref) at the positive terminal of comparator 214 and control voltage V(ctrl) at the negative terminal of comparator 214, as described above referring to the example of FIG. 4. Signal PFM is a non-zero voltage in cases where a voltage difference exists between control voltage V(ctrl) and reference output voltage V(ref). Signal PFM may become a negative voltage as a result of control voltage V(ctrl) being greater than reference output voltage V(ref). In cases where signal PFM is a negative voltage, PWM generators 215 and 216 may transition signals PWM1 and PWM2.

Illustrated in FIG. 6, device states may indicate which of the transistors Q1-Q4 are conductive. Logic circuitry 220 may cause the buck circuitry to alternate device states between a charging state and a discharging state. For example, logic circuitry 220 may cause buck circuitry to charge flying capacitor C4 with flying voltage V(fly) during the charging states. During the discharging states, logic circuitry 220 may cause buck circuitry to discharge flying voltage V(fly) from flying capacitor C4. Between each charging state and discharging state is a null state where flying voltage V(fly) is neither charged to flying capacitor C4 nor discharged from flying capacitor C4.

To establish the charging state, logic circuitry 220 may output signal PWM1 on gate line G1 to drive transistor Q1 and inverted signal PWM2 on gate line G3 to drive transistor Q3 so that the transistors Q1, Q3 are conductive and may also output signal PWM2 on gate line G2 to drive transistor Q2 and inverted signal PWM2 on gate line G4 to drive transistor Q4 so that transistors Q2, Q4 are nonconductive. Logic circuitry 220 may, in response to establishing the charging state, cause an electrical connection from the load 141 to the input voltage V(in) through inductor L1, transistor Q3, flying capacitor C4 and transistor Q1. By way of the charging state, logic circuitry 220 may cause flying capacitor C4 to become charged with flying voltage V(fly).

To establish the discharging state, logic circuitry 220 may output signal PWM2 on gate line G2 to drive transistor Q2 and inverted signal PWM2 on gate line G4 to drive transistor Q4 so that transistors Q2, Q4 are conductive and may also output signal PWM1 on gate line G1 to drive transistor Q1 and inverted signal PWM2 on gate line G3 to drive transistor Q3 so that the transistors Q1, Q3 are nonconductive. Logic circuitry 220 may, in response to establishing the discharging state, cause an electrical connection from the load 141 to ground through inductor L1, transistor Q2, flying capacitor C4 and transistor Q4. By way of the discharging state, logic circuitry 220 may cause a discharge of flying voltage V(fly) from flying capacitor C4 to ground.

The pulse width of signal PWM1 may establish the time period for the charging state whereas the pulse width of signal PWM2 may establish the time period for the discharging state. As illustrated in the example of FIGS. 5 and 6, PWM generator 215 may commence the pulse width for signal PWM1 on the leading edges of system clock (clk) and terminate the pulse width for signal PWM1 on the leading edges of pulse RST1. PWM generator 216 may commence the pulse width for signal PWM2 on the leading edges of system clock (clk) and terminate the pulse width for signal PWM2 on the leading edges of pulse RST2.

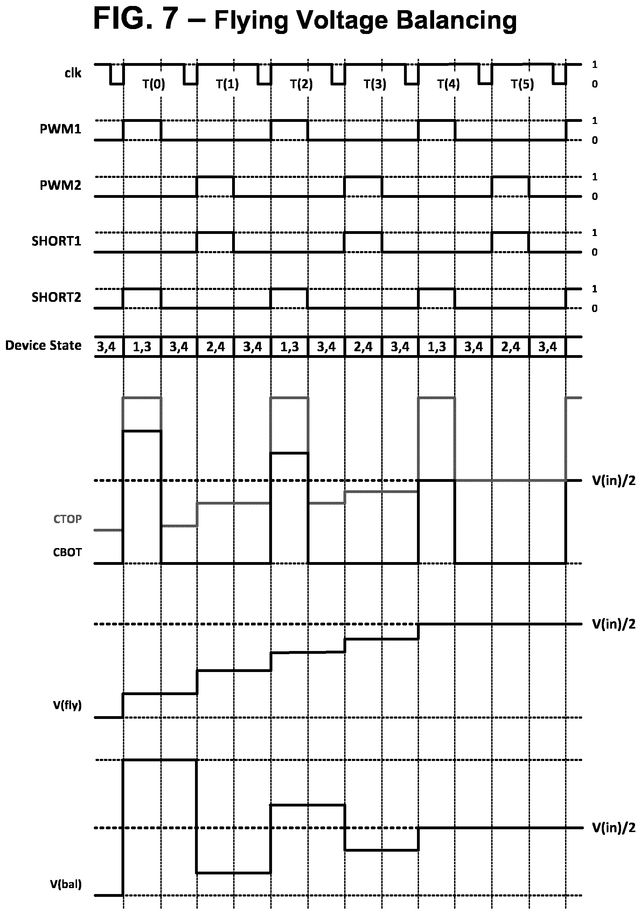

FIG. 7 illustrates an example flying voltage balancing operation. The switching of pulses SHORT1 and SHORT2 is typically recurring. For example, logic circuitry 220 may output pulse SHORT1 to switch SW1. Closure of switch SW1 may occur in instances where pulse SHORT1 is logic 1. In response to signal PWM1 being at logic 1 along with signal PWM2 being concurrently at logic 0, pulse SHORT1 is logic 1. Otherwise, pulse SHORT1 is logic 0. At the time pulse SHORT1 is logic 1, those skilled in the art will appreciate that transistors Q1, Q3 are conductive and transistors Q2, Q4 are nonconductive. Closure of switch SW1 may short circuit node CTOP to the terminal of balancing capacitor C6. Flying voltage V(fly) may appear on flying capacitor C4 and balancing voltage V(bal) may appear on balancing capacitor C6. While node CTOP is short circuited to the terminal of balancing capacitor C6, the sum of flying voltage V(fly) and balancing voltage V(bal) is equal to the input voltage V(in).

Logic circuitry 220 may output pulse SHORT2 to switch SW2. Closure of switch SW2 may occur in instances where pulse SHORT2 is logic 1. In response to signal PWM2 being at logic 1 along with signal PWM1 being concurrently at logic 0, pulse SHORT2 is logic 1. Otherwise, pulse SHORT2 is logic 0. At the time pulse SHORT2 is logic 1, those skilled in the art will appreciate that transistors Q2, Q4 are conductive and transistors Q1, Q3 are nonconductive. Closure of switch SW2 may short circuit node CBOT to the terminal of balancing capacitor C6. While node CBOT is short circuited to the terminal of balancing capacitor C6, flying voltage V(fly) is equal to balancing voltage V(bal). Another terminal of balancing capacitor C6 may be coupled to ground.

During powering of device 100, logic circuitry 220 may cause the buck circuitry to initialize flying voltage V(fly) on flying capacitor C4 to the input voltage V(in)/2. In the example of FIG. 7, time period T(4) and time periods thereafter illustrate the flying voltage balancing operation while in steady state timing. During steady state timing, logic circuitry 220 may maintain flying voltage V(fly) at approximately the input voltage V(in)/2. A voltage level at "approximately the input voltage V(in)/2" refers to a voltage value that is sufficient to maintain the output voltage V(out) at the input voltage V(in)/2. Logic circuitry 220 may transition pulses SHORT1 and SHORT2 from one logic level to another logic level so as to maintain flying voltage V(fly) at a value of approximately the input voltage V(in)/2.

A voltage imbalance is a condition where the average value for flying voltage V(fly) is a value other than the input voltage V(in)/2. The voltage imbalance may emerge during a reference time period in some instances, as will be explained in detail. The reference time period is the full clock cycle. The voltage imbalance in may result from a mismatch between the charging state and discharging state. This mismatch may occur due to factors including, but not limited to, parasitic resistances and capacitances in switching regulator 131, leakage currents at nodes CTOP and CBOT, and a disparity between the duty cycles for signals PWM1 and PWM2. The voltage imbalance may be in the form of a charging imbalance or a discharge imbalance.

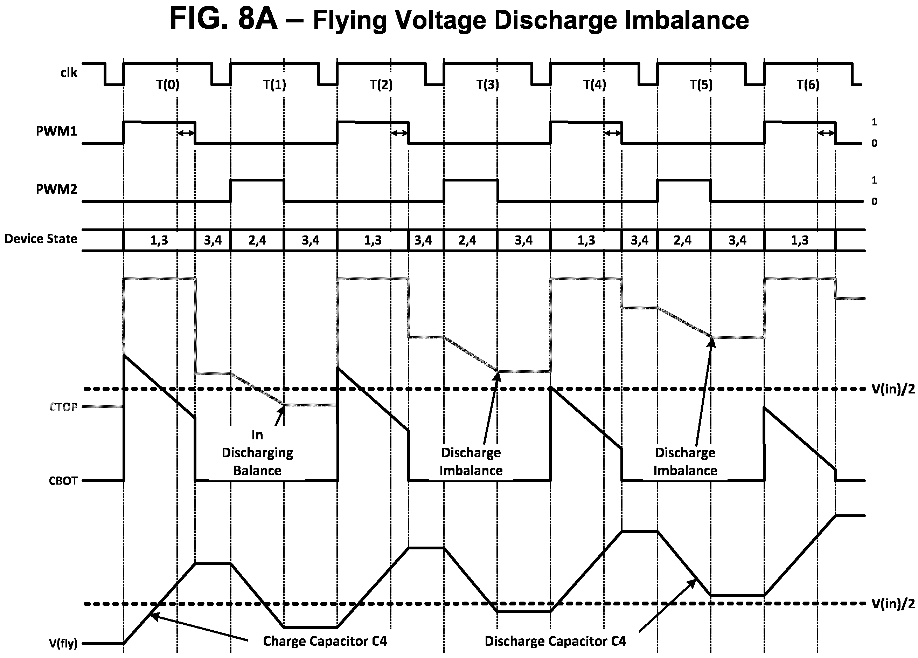

A discharge imbalance is a condition where the time period for the charging state exceeds the time period for the discharging state, as illustrated in the example of FIG. 8A. For example, CTOP sampling periods for sampling voltages appearing at node CTOP may occur at a transition of signal PWM2 with the transistors Q3, Q4 becoming conductive and transistors Q1, Q2 becoming nonconductive at the transition of signal PWM2. The discharge imbalance may appear over successive cycles of system clock (clk), as illustrated in FIG. 8A.

Logic circuitry 220 may compare the input voltage V(in) with the voltage appearing at node CTOP to detect an existence of a discharge imbalance. While comparing the input voltage V(in) with the voltage appearing at node CTOP, logic circuitry 220 may sample the voltage appearing at node CTOP during a CTOP sampling period. A discharge imbalances exist in cases where a voltage appearing at node CTOP at a CTOP sampling period is higher than the input voltage V(in)/2. In response to detecting the existence of a discharge imbalance, logic circuitry 220 may cause a discharging state to repeat during consecutive time periods.

For example, logic circuitry 220 may cause the buck circuitry to repeat the device state from the previous time period. As an illustration, signal PWM1 may transition from logic 0 to logic 1 at time period T(4) on the rising edge of system clock (clk) in FIG. 8A. Also in FIG. 8A, signal PWM2 may transition from logic 0 to logic 1 at time period T(5) on the rising edge of system clock (clk). In cases where a discharging state is repeated during consecutive time periods, logic circuitry 220 may exchange the timing of signal PWM1 with signal PWM2 while simultaneously exchanging the timing of signal PWM2 with signal PWM1.

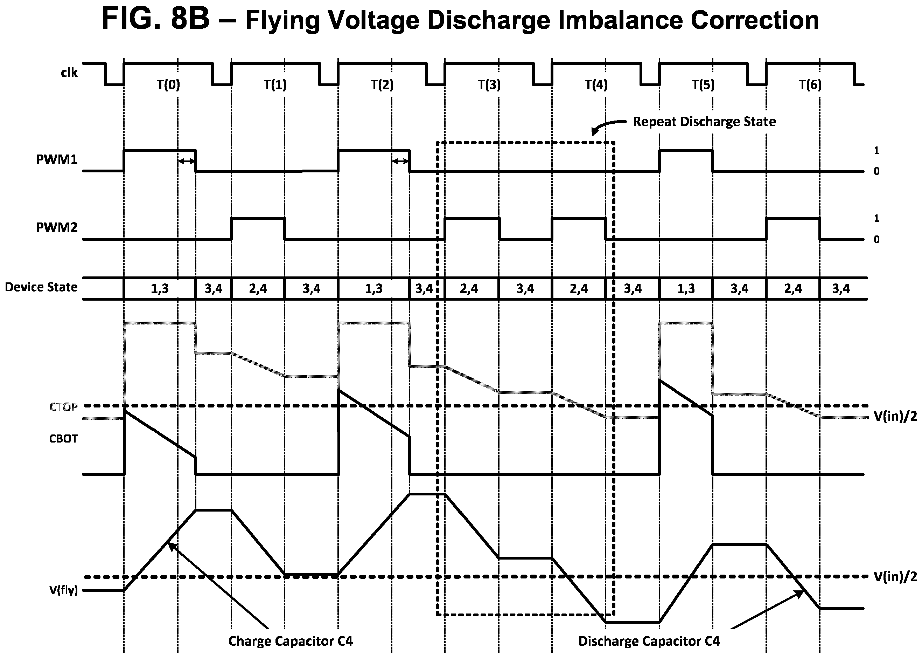

Referring to FIG. 8B, an example flying voltage discharge imbalance correction operation is illustrated. For example, a discharging state may appear at time period T(3) along with the discharging state repeated at the next occurring time period T(4). In causing the discharging state to repeat during consecutive time periods in the example of FIG. 8B, logic circuitry 220 may exchange the timing of signal PWM1 and signal PWM2 by causing signal PWM2 to transition from logic 0 to logic 1 at time period T(3) on the rising edge of system clock (clk) along with causing signal PWM1 to transition from logic 0 to logic 1 at time period T(4) on the rising edge of system clock (clk). Logic circuitry 220 may cause a discharging state to repeat during consecutive time periods in response to detecting the existence of a discharge imbalance. In causing the discharging state to repeat, logic circuitry 220 may exchange the timing of signal PWM1 and signal PWM2. Thereafter, logic circuitry 220 may resume steady state timing as illustrated in FIG. 6 by causing signal PWM1 to transition from logic 0 to logic 1 at the succeeding time period T(5) along with causing signal PWM2 to transition from logic 0 to logic 1 at time period T(6).

Logic circuitry 220 may perform the flying voltage discharge imbalance correction operation of FIG. 8B independently without performing the flying voltage balancing operation of FIG. 7. Alternatively, logic circuitry 220 may perform the flying voltage discharge imbalance correction operation of FIG. 8B along with performing the flying voltage balancing operation of FIG. 7.

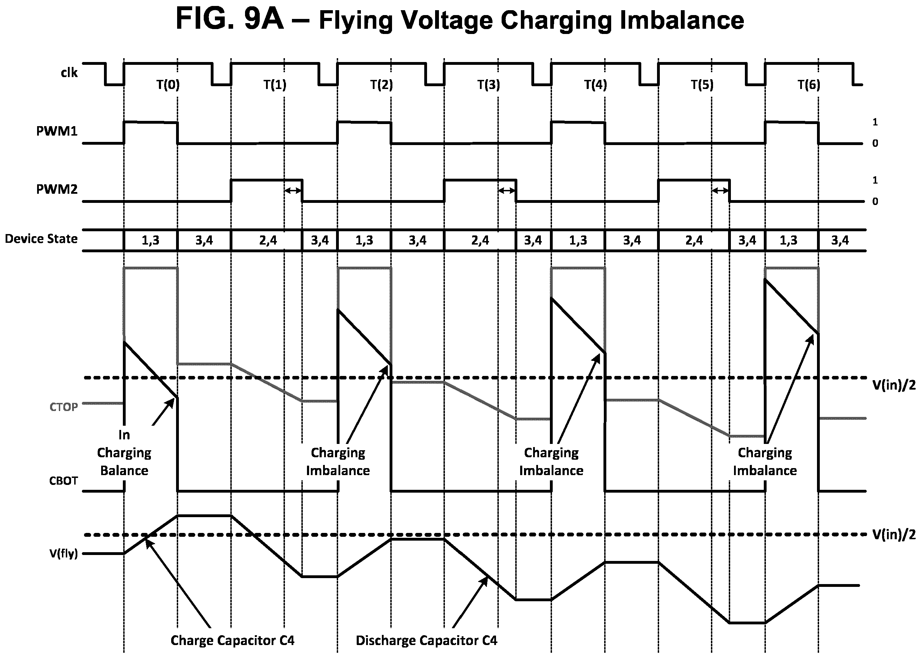

A charging imbalance is a condition where the time period for the discharging state exceeds the time period for the charging state, as illustrated in the example of FIG. 9A. For example, CBOT sampling periods for sampling voltages appearing at node CBOT may occur at a transition of signal PWM1 with the transistors Q3, Q4 becoming conductive and transistors Q1, Q2 becoming nonconductive at the transition of signal PWM1. The charging imbalance may appear over successive cycles of system clock (clk), as illustrated in FIG. 9A.

Logic circuitry 220 may compare the input voltage V(in) with the voltage appearing at node CBOT to detect an existence of a charging imbalance. While comparing the input voltage V(in) with the voltage appearing at node CBOT, logic circuitry 220 may sample the voltage appearing at node CBOT during a CBOT sampling period. Charging imbalances exist in cases where a voltage appearing at node CBOT at a CBOT sampling period is higher than the input voltage V(in)/2. In response to detecting the existence of a charging imbalance, logic circuitry 220 may cause a charging state to repeat during consecutive time periods.

For example, logic circuitry 220 may cause the buck circuitry to repeat the device state from the previous time period. As an illustration, signal PWM2 may transition from logic 0 to logic 1 at time period T(3) on the rising edge of system clock (clk) in FIG. 9A. Also in FIG. 9A, signal PWM1 may transition from logic 0 to logic 1 at time period T(4) on the rising edge of system clock (clk). In cases where a charging state is repeated during consecutive time periods, logic circuitry 220 may exchange the timing of signal PWM2 with signal PWM1 while simultaneously exchanging the timing of signal PWM1 with signal PWM2.

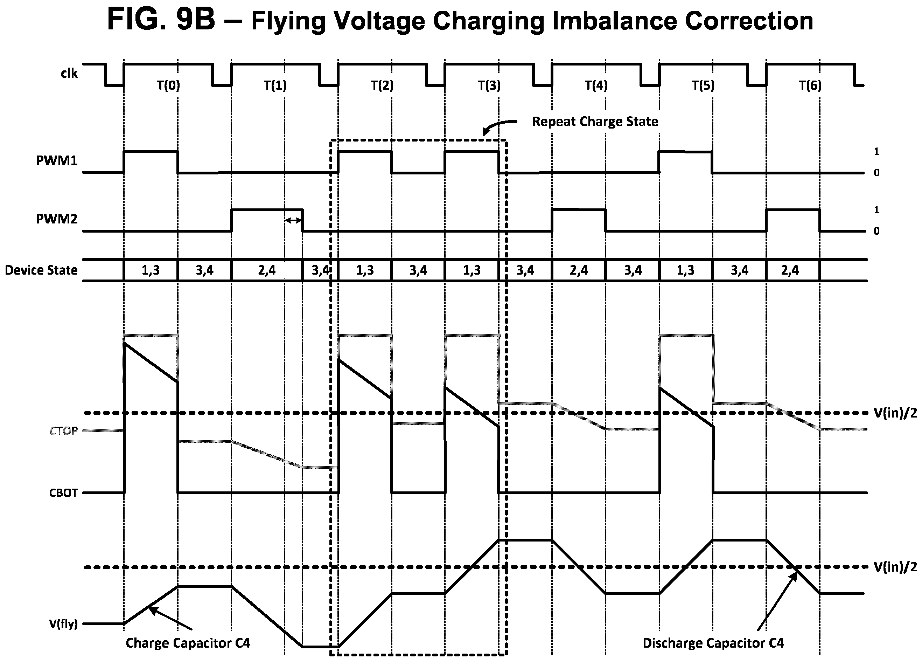

FIG. 9B illustrates an example flying voltage charging imbalance correction operation. For example, in FIG. 9B, a charging state may appear at time period T(2) along with the charging state repeated at the next occurring time period T(3). In causing the charging state to repeat during consecutive time periods in the example of FIG. 9B, logic circuitry 220 may exchange the timing of signal PWM2 and signal PWM1 by causing signal PWM1 to transition from logic 0 to logic 1 at time period T(3) on the rising edge of system clock (clk) along with causing signal PWM2 to transition from logic 0 to logic 1 at time period T(4) on the rising edge of system clock (clk). Logic circuitry 220 may cause the charging state to repeat during consecutive time periods in response to detecting the existence of a charging imbalance. In causing the charging state to repeat, logic circuitry 220 may exchange the timing of signal PWM2 and signal PWM1. Thereafter, logic circuitry 220 may resume steady state timing as illustrated in FIG. 6 by causing signal PWM1 to transition from logic 0 to logic 1 at the succeeding time period T(5) along with causing signal PWM2 to transition from logic 0 to logic 1 at time period T(6).

Logic circuitry 220 may perform the flying voltage charging imbalance correction operation of FIG. 9B independently without performing the flying voltage balancing operation of FIG. 7. Alternatively, logic circuitry 220 may perform the flying voltage charging imbalance correction operation of FIG. 9B along with performing the flying voltage balancing operation of FIG. 7.

Logic circuitry 220 may perform the flying voltage balancing operation of FIG. 7 independently without performing the flying voltage discharge imbalance correction operation of FIG. 8B. Similarly, logic circuitry 220 may perform the flying voltage balancing operation of FIG. 7 independently without performing the flying voltage charging imbalance correction operation of FIG. 9B. Alternatively, logic circuitry 220 may perform the flying voltage balancing operation of FIG. 7 together with the flying voltage discharge imbalance correction operation of FIG. 8B and the flying voltage charging imbalance correction operation of FIG. 9B.

Those skilled in the art will also appreciate the arrangement or interconnection of components such as "coupled," "connected," "on," "under," or similar wording allows for indirect connections, or intervening components or layers.

Certain operations of methods according to the technology, or of systems executing those methods, may be represented schematically in the figures or otherwise discussed herein. Unless otherwise specified or limited, representation in the figures of particular operations in particular spatial order may not necessarily require those operations to be executed in a particular sequence corresponding to the particular spatial order. Correspondingly, certain operations represented in the figures, or otherwise disclosed herein, may be executed in different orders than are expressly illustrated or described, as appropriate for particular examples of the technology. Further, in some examples, certain operations may be executed in parallel or partially in parallel, including by dedicated parallel processing devices, or separate computing devices configured to interoperate as part of a large system.

As used herein, unless otherwise limited or defined, "or" indicates a non-exclusive list of components or operations that may be present in any variety of combinations, rather than an exclusive list of components that may be present only as alternatives to each other. For example, a list of "A, B, or C" indicates options of: A; B; C; A and B; A and C; B and C; and A, B, and C.

Correspondingly, the term "or" as used herein is intended to indicate exclusive alternatives only when preceded by terms of exclusivity, such as, e.g., "either," "only one of," or "exactly one of." Further, a list preceded by "one or more" (and variations thereon) and including "or" to separate listed elements indicates options of one or more of any or all of the listed elements.

For example, the phrases "one or more of A, B, or C" and "at least one of A, B, or C" indicate options of: one or more A; one or more B; one or more C; one or more A and one or more B; one or more B and one or more C; one or more A and one or more C; and one or more of each of A, B, and C.

Similarly, a list preceded by "a plurality of" (and variations thereon) and including "or" to separate listed elements indicates options of multiple instances of any or all of the listed elements. For example, the phrases "a plurality of A, B, or C" and "two or more of A, B, or C" indicate options of: A and B; B and C; A and C; and A, B, and C.

In general, the term "or" as used herein only indicates exclusive alternatives (e.g., "one or the other but not both") when preceded by terms of exclusivity, such as, e.g., "either," "only one of," or "exactly one of."

Any mark, if referenced herein, may be common law or registered trademarks of third parties affiliated or unaffiliated with the applicant or the assignee. Use of these marks is by way of example and shall not be construed as descriptive or to limit the scope of disclosed or claimed embodiments to material associated only with such marks.

The articles "a," "an," and "the" are intended to include the plural forms as well, unless the context clearly indicates otherwise.

The terms "comprises," "includes," and "has" specify the presence of stated features, numbers, operations, members, elements, and/or combinations thereof, but do not preclude the presence or addition of one or more other features, numbers, operations, members, elements, and/or combinations thereof.

Throughout the application, ordinal numbers (e.g., first, second, third, etc.) may be used as an adjective for an element (i.e., any noun in the application).

Although terms such as "first," "second," and "third" may be used herein to describe various members, components, regions, layers, or sections, these members, components, regions, layers, or sections are not to be limited by these terms.

Rather, these terms are only used to distinguish one member, component, region, layer, or section from another member, component, region, layer, or section.

The use of ordinal numbers is not to imply or create any particular ordering of the elements nor to limit any element to being only a single element unless expressly disclosed, such as by the use of the terms "before," "after," "single," and other such terminology.

Rather, the use of ordinal numbers is to distinguish between the elements.

By way of an example, a first element is distinct from a second element, and the first element may encompass more than one element and succeed (or precede) the second element in an ordering of elements.

Thus, a first member, component, region, layer, or section referred to in examples described herein may also be referred to as a second member, component, region, layer, or section without departing from the teachings of the examples.

The following are further embodiments of the invention:

1. An apparatus comprising:
buck circuitry configured to:

charge, in response to a device state being a charging state, a flying capacitor with a voltage, and
discharge, in response to the device state being a discharging state, the voltage from the flying capacitor; and
logic circuitry configured to:

cause, in response to detecting a voltage balance during a reference time period, the buck circuitry to transition the device state, and
cause, in response to detecting a voltage imbalance during the reference time period, the buck circuitry to repeat the device state occurring at the reference time period.

2. The apparatus according to embodiment 1, wherein the voltage imbalance is a condition where, during the reference time period, an average value for the voltage is a value other than an input voltage.

3. The apparatus according to embodiment 2, wherein the voltage balance is a condition where, during the reference time period, the average value for the voltage is the input voltage.

4. The apparatus according to embodiment 2, wherein the logic circuitry is configured to transition, so as to maintain the voltage at a value of approximately the input voltage, pulses from one logic level to another logic level.

5. The apparatus according to embodiment 2, wherein the buck circuitry is configured to sequence, to decrease the input voltage to an output voltage, a transitioning of transistors between being conductive and non-conductive.

6. The apparatus according to embodiment 5, wherein the logic circuitry is configured to output, to the transistors, signals that sequence the transitioning of the transistors.

7. The apparatus according to embodiment 1, wherein the buck circuitry is configured to alternate between the charging state and the discharging state.

8. The apparatus according to embodiment 1, wherein the buck circuitry is configured discharge, to ground, the voltage from the flying capacitor.

9. The apparatus according to embodiment 1, wherein the reference time period is a full clock cycle.

10. The apparatus according to embodiment 1, wherein the logic circuitry is configured to detect the voltage balance.

11. The apparatus according to embodiment 1, wherein the voltage balance is an equivalence between a time period for the charging state and a time period for the discharging state.

12. The apparatus according to embodiment 1, wherein the logic circuitry is configured to detect the voltage imbalance.

13. The apparatus according to embodiment 1, wherein the logic circuitry causes the buck circuitry to repeat the discharging state in response to a time duration for the charging state exceeding a time duration for the discharging state.

14. The apparatus according to embodiment 1, wherein the logic circuitry causes the buck circuitry to repeat the charging state in response to a time duration for the discharging state exceeding a time duration for the charging state.

15. The apparatus according to embodiment 1, wherein the logic circuitry causes the buck circuitry to repeat, during a time period subsequent to the reference time period, the device state occurring at the reference time period.

16. The apparatus according to embodiment 1, wherein the voltage imbalance is a result of a mismatch between the charging state and discharging state.

17. The apparatus according to embodiment 1, wherein the buck circuitry comprises the flying capacitor.

18. An apparatus comprising:

buck circuitry configured to:

sequence, to decrease an input voltage to an output voltage, a transitioning of transistors between being conductive and non-conductive,
charge, in response to a device state being a charging state, a flying capacitor with a voltage, and
discharge, in response to the device state being a discharging state, the voltage from the flying capacitor; and
logic circuitry configured to:

output, to the transistors, signals that sequence the transitioning of the transistors,
cause, in response to detecting a voltage balance during a reference time period, the buck circuitry to transition the device state, and
cause, in response to detecting a voltage imbalance during the reference time period, the buck circuitry to repeat the device state occurring at the reference time period.

19. A device comprising:

a power receiver unit configured to convert power into an input voltage;

buck circuitry configured to:

charge, in response to a device state being a charging state, a flying capacitor with a voltage, and
discharge, in response to the device state being a discharging state, the voltage from the flying capacitor; and
logic circuitry configured to:

cause, in response to detecting a voltage balance during a reference time period, the buck circuitry to transition the device state, and
cause, in response to detecting a voltage imbalance during the reference time period, the buck circuitry to repeat the device state occurring at the reference time period,
wherein the voltage imbalance is a condition where, during the reference time period, an average value for the voltage is a value other than the input voltage.

20. The device according to embodiment 19, wherein the power receiver unit is configured to wirelessly receive the power.

**Claims**

1. An apparatus comprising:

   buck circuitry configured to:

   charge, in response to a device state being a charging state, a flying capacitor with a voltage, and discharge, in response to the device state being a discharging state, the voltage from the flying capacitor; and

   logic circuitry configured to:

   cause, in response to detecting a voltage balance during a reference time period, the buck circuitry to transition the device state, and
   cause, in response to detecting a voltage imbalance during the reference time period, the buck circuitry to repeat the device state occurring at the reference time period.

2. The apparatus according to claim 1, wherein the voltage imbalance is a condition where, during the reference time period, an average value for the voltage is a value other than an input voltage.

3. The apparatus according to claim 2, wherein the voltage balance is a condition where, during the reference time period, the average value for the voltage is the input voltage
   and/or
   wherein the logic circuitry is configured to transition, so as to maintain the voltage at a value of approximately the input voltage, pulses from one logic level to another logic level.

4. The apparatus according to claim 2, wherein the buck circuitry is configured to sequence, to decrease the input voltage to an output voltage, a transitioning of transistors between being conductive and non-conductive,
   in particular,
   wherein the logic circuitry is configured to output, to the transistors, signals that sequence the transitioning of the transistors.

5. The apparatus according to one of the previous claims, wherein the buck circuitry is configured to alternate between the charging state and the discharging state
   and/or
   wherein the buck circuitry is configured discharge, to ground, the voltage from the flying capacitor.

6. The apparatus according to one of the previous claims, wherein the reference time period is a full clock cycle
   and/or
   wherein the logic circuitry is configured to detect the voltage balance.

7. The apparatus according to one of the previous claims, wherein the voltage balance is an equivalence between a time period for the charging state and a time period for the discharging state
   and/or
   wherein the logic circuitry is configured to detect the voltage imbalance.

8. The apparatus according to one of the previous claims, wherein the logic circuitry causes the buck circuitry to repeat the discharging state in response to a time duration for the charging state exceeding a time duration for the discharging state.

9. The apparatus according to one of the previous claims, wherein the logic circuitry causes the buck circuitry to repeat the charging state in response to a time duration for the discharging state exceeding a time duration for the charging state.

10. The apparatus according to one of the previous claims, wherein the logic circuitry causes the buck circuitry to repeat, during a time period subsequent to the reference time period, the device state occurring at the reference time period.

11. The apparatus according to one of the previous claims, wherein the voltage imbalance is a result of a mismatch between the charging state and discharging state.

12. The apparatus according to one of the previous claims, wherein the buck circuitry comprises the flying capacitor.

13. An apparatus comprising:

buck circuitry configured to:

sequence, to decrease an input voltage to an output voltage, a transitioning of transistors between being conductive and non-conductive,
charge, in response to a device state being a charging state, a flying capacitor with a voltage, and
discharge, in response to the device state being a discharging state, the voltage from the flying capacitor; and

logic circuitry configured to:

output, to the transistors, signals that sequence the transitioning of the transistors,
cause, in response to detecting a voltage balance during a reference time period, the buck circuitry to transition the device state, and
cause, in response to detecting a voltage imbalance during the reference time period, the buck circuitry to repeat the device state occurring at the reference time period.

14. A device comprising:

a power receiver unit configured to convert power into an input voltage;
buck circuitry configured to:

charge, in response to a device state being a charging state, a flying capacitor with a voltage, and
discharge, in response to the device state being a discharging state, the voltage from the flying capacitor; and

logic circuitry configured to:

cause, in response to detecting a voltage balance during a reference time period, the buck circuitry to transition the device state, and
cause, in response to detecting a voltage imbalance during the reference time period, the buck circuitry to repeat the device state occurring at the reference time period,

wherein the voltage imbalance is a condition where, during the reference time period, an average value for the voltage is a value other than the input voltage.

15. The device according to claim 14, wherein the power receiver unit is configured to wirelessly receive the power.

# FIG. 1

Device
100

Power Receiver Unit
121

Rectifier
122

—Power—

—V(rect)—

Voltage
Regulator
123

—V(in)—

I-in →

Switching
Regulator
131

—V(out)—

Load
141

Signaling

—Tuning—

Control Circuitry
111

—DAC—

EP 4 718 695 A1

FIG. 2

# FIG. 3

Low Range Mode: GND ≤ VSW < V(in)/2

High Range Mode: V(in)/2 ≤ VSW ≤ V(in)

# FIG. 4

Comparator
214

Output Voltage Loop
211

Input Voltage Loop
212

Input Current Loop
213

# FIG. 5

# FIG. 6 - Steady State Timing

# FIG. 7 – Flying Voltage Balancing

# FIG. 8A – Flying Voltage Discharge Imbalance

EP 4 718 695 A1

# FIG. 8B – Flying Voltage Discharge Imbalance Correction

EP 4 718 695 A1

# FIG. 9A – Flying Voltage Charging Imbalance

EP 4 718 695 A1

# FIG. 9B – Flying Voltage Charging Imbalance Correction

Europäisches Patentamt

European Patent Office

Office européen des brevets

# EUROPEAN SEARCH REPORT

**Application Number**

EP 25 20 1899

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 826 163 A1 (MEDIATEK INC [TW]) 26 May 2021 (2021-05-26) * paragraph [0011] - paragraph [0013] * * paragraph [0016] - paragraph [0017] * * figures 1-8 * | 1-15 | INV. H02M1/00 H02M3/07 H02M3/158 |
| X | US 2019/058385 A1 (LAZARO ORLANDO [US] ET AL) 21 February 2019 (2019-02-21) * paragraph [0022] * * paragraph [0024] * * paragraph [0030] - paragraph [0037] * * figures 6-8 * | 1-15 | ADD. H02M7/483 |

-----

-----

**TECHNICAL FIELDS SEARCHED (IPC)**

H02M

The present search report has been drawn up for all claims

| Place of search | Date of completion of the search | Examiner |
|---|---|---|
| The Hague | 11 February 2026 | Madouroglou, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 1899

This annex lists the patent family members relating to the patent documents cited in  the above-mentioned European search report.
The members are as contained in the European Patent Office EDP file on
The European Patent Office is in no way liable for these particulars which are merely given for the purpose of information.

11-02-2026

| Patent document cited in search report | | Publication date | Patent family member(s) | | Publication date |
|---|---|---|---|---|---|
| EP 3826163 | A1 | 26-05-2021 | CN | 112838759 A | 25-05-2021 |
| | | | EP | 3826163 A1 | 26-05-2021 |
| | | | TW | 202121817 A | 01-06-2021 |
| | | | US | 2021159790 A1 | 27-05-2021 |
| US 2019058385 | A1 | 21-02-2019 | NONE | | |

EPO FORM P0459

For more details about this annex : see Official Journal of the European Patent Office, No. 12/82